# EUROPEAN PATENT SPECIFICATION

(11) **EP 0 552 811 B1**
(45) Date of publication and mention of the grant of the patent: **14.10.1998**
(21) Application number: 93101085.4
(22) Date of filing: 25.01.1993
(51) Int. Cl.: F16F 1/12, B60G 11/52

(54) **Damped elastic system for a vehicle suspension and spacing element utilizable on such a system**
Gedämpftes elastisches System für eine Fahrzeugaufhängung und Abstandselement für ein solches System
Système élastique à amortissement pour suspension de véhicule et élément d'espacement utilisable dans un tel système

(30) Priority: 24.01.1992 IT AL920001 U
(43) Date of publication of application: 28.07.1993
(73) Proprietor: Muscarella, Giovanni, I-12050 Castagnito (IT)
(72) Inventor: Muscarella, Giovanni, I-12050 Castagnito (IT)
(74) Representative: Plebani, Rinaldo

(56) References cited:
- EP-A- 0 093 669
- DE-U- 8 526 440
- US-A- 2 801 841
- US-A- 2 807 459
- US-A- 3 034 777
- US-A- 3 198 508
- US-A- 3 773 309
- US-A- 4 098 498
- Patent Abstracts of Japan vol. 9, no. 162(M-394)(1885) 6 July 1985 & JP-A- 60 034 536(KEISOKU TOKUNAGA)

## Description

The present invention relates to a damped elastic system for a vehicle suspension and to an element composed of elastomeric material utilizable on such a system.

Helical springs are known to be used in vehicle suspensions as elastic means to support the vehicle body and prevent, as much as possible, the same from undergoing such shocks, as are inevitably born by the vehicle wheels during running owing to uneveness of the road and according to the vehicle running speed, so that they may be damped as much as possible.

Suspension springs flexibility, however, owing to elastic oscillations persisting after the strains undergone further to said shocks, causes rolling, pitching and rebounding motions that take place during vehicle running, consequently adversely affecting both running comfort and, above all, road holding, in particular around bends, therefore affecting the safety of the people inside the vehicle.

The above phenomena are only partially damped by the presence of hydraulic or pneumatic shock absorbers mounted between vehicle body and wheels so as to work jointly with suspension springs. European patent No 0093669 therefore proposes using, in place of the springs, a damped elastic system composed of a helical spring, a plurality of spacers made of viscoelastic material being inserted between each pair of adjacent turns of the spring along the axial extension of the latter; said spacers are of such a size (and the material they are made of possesses such viscoelastic characteristics), that they do not cause the stiffness of the spring to vary but only damp wide-amplitude oscillations, whose frequency is equal to the resonance frequency of the spring. In such a way, though, the system does nothing but behave as a high-damping system, which does not remove the above-mentioned drawbacks altogether, causing suspensions response to be slower and, consequently, running safety during fast driving, in particular on "misti veloci" (fast routes consisting of stretches and bends), to decrease.

Similarly, the mere occasional insertion of an elastic spacer between one single pair of turns of a suspension spring to increase its pitch locally, as taught in US patent 2,673,084 or, e.g. also in US patent 2,801,841, may be useful to offset localized mechanical yielding of the spring, but it noticeably increases, on the other hand, the stiffness of the spring (thus reducing suspension comfort) with substantially no consequent reduction in either pitch or roll.

The aim of the present invention is the embodiment of a damped elastic system based on the use of a helical spring and of elastic spacers inserted between the turns of the spring, such that may not present any of the above-mentioned drawbacks, both easy to install and economical to manufacture and which may provide for the natural tendency of the springs to persist in their oscillations following the strains occurred during vehicle running, according to the various working conditions, to be effectively checked, trying to curb springs oscillations after the strains they have undergone, thus reducing the chances for resonances to be created.

Said aims are achieved by the present invention, in that it provides for a damped elastic system for a vehicle suspension comprising a helical spring and at least one pair of spacing elements made of elastomeric material and inserted between adjacent turns of the spring, whereby said spacing elements are symmetrically arranged about said adjacent turns and equally spaced along the whole circumference of said spring ; characterized in that: (i) the height of said spacing elements, in the direction of the axis of symmetry (K) of said helical spring, is equal to the distance, at rest, between said adjacent turns between which said spacing elements are inserted; (ii) no said spacing elements are to be found at least between such turns, as are next to said adjacent turns, between which the spacing elements are inserted, so as to allow at least some of the turns of spring to freely vary their distance according to the spring elastic deformation; and (iii) said system further comprises means to securely connect, at their opposite ends, the spacing elements in a fixed position onto said adjacent turns.

In this way, the suspension is slightly stiffened, without substantially varying, though, its comfort; at the same time, spring oscillations are damped, partly further to the damping effect due to the elastic energy absorbed by the spacers strain and, to a greater extent, to the fact that, in connection with the two turns between which the spacers are inserted, oscillations transmission is basically hindered by the relative stiffness of the spacers, tending to prevent said turns to freely approach each other, so that the spring' s behaviour is similar to that of two or more springs arranged in series with the insertion of dampers. Therefore, the chance of resonances being triggered off is highly reduced and, consequently, both pitch and roll strongly improve, whereas total suspension damping does not increase noticeably so that its response continues to be quite prompt and suitable for fast but totally safe driving.

A spacing element as may be used in the damped elastic system according to the present invention, is of the type manufactured utilizing elastomeric material, capable of being inserted between two adjacent turns of a helical suspension spring, said element comprising relevant groove-shaped seats capable of matching, in a complementary manner, the relevant opposite sections of said adjacent turns of the spring and featuring a general axis of symmetry, and characterized by the fact that it is provided with at least one through hole parallel to said general axis of symmetry and by the fact that said groove-shaped seats are orthogonal to said general axis of symmetry.

In this way, the spacing elements shape is such, as to enable it to perform elastic buckling in order to vary its height in the direction of the spring axis, in a preferential direction, in the case in point, tangentially to the turns of the helical spring; which, as we have previously seen, leads to the system's functionality being improved.

Said spacing element is made of a weatherproof elastomer, resistant to sudden changes in temperature, for instance, a polyurethan elastomer chosen in the following group: ADIPRENE, DESMOPAN, SPECTRIM, CYANAPRENE, CASTHETONE and BAYFLEX (All of which are Registered Trademarks), and, in any case, having SHORE hardness between 60 and 95.

In the system according to the present invention, the spacing element may be inserted between two turns only of a helical spring, preferably about halfway down its axial extension, or else among any number of turns, avoiding, though, the insertion of further spacers between such turns, as are next to those between which said spacers have been inserted, so that they may freely vary their distance according to the spring elastic deformation.

Said spacing element is preferably annular in shape and may present any shape whatsoever, for example, either circular or polygonal; in any case, its width, in the direction of the groove-shaped seats extension, is smaller than its height, as measured orthogonally to its general axis of symmetry and to said groove-shaped seats, so that it may be inserted between the turns, with a released spring, merely by means of a 90° rotation around the hole axis.

According to one possible embodiment hereof, relevant opposite ends, in the direction of the height, of the spacing element, according to the present invention, are pliers-shaped, a portion of each end being capable of elastic deformation, so as to engage, upon release, a relevant section of a turn of a helical suspension spring; said pliers-shaped ends presenting, on opposite sides, respective hooking openings, parallel to said hole, so that, in the case in point, insertion between the turns of the spring may be carried out by inserting the oblique element between the turns, subsequently causing it to tilt against same.

According to the present invention, said spacing element is provided for in different shapes, dimensions and according to the stiffness of the material used to manufacture it, so as to create a range of targeted spacing elements, according to both different characteristics of the spring they are designed for and vehicle mass.

Further characteristics and advantages of the present invention will be better described by way of two non-limiting examples, with reference to the accompanying drawings, in which:
Fig. 1 shows a front view of one element according to the present invention;
Fig. 2 shows a side view of same;
Fig. 3 shows a partial section of a damped elastic system according to the present invention, in which a helical spring features two spacing elements, according to Fig. 1, already inserted therein and represented during hooking to the turns of the spring;
Fig. 4 shows a perspective view of two spacing elements according to the present invention during insertion in a helical spring, with relevant hooking means;
Fig. 5 shows the damped elastic system according to the present invention being fitted on to the suspensions of a motor vehicle, with a schematic view of same; and
Fig.s 6 and 7 show a front elevation of a possible alternative embodiment of the spacing element as shown in Fig. 1 and a side section thereof taken along lines VII-VII.

With reference to Fig.s 1 to 5, element 10 according to the present invention presents, in the example given, an annular shape and it is designed to be inserted in the gap between two subsequent turns 11a and 11b of a helical spring 11 belonging to the suspension systems, in particular, of a motor vehicle.

Element 10, in the example in point, presents two radial projections, diametrically opposed, respectively 10'and 10", each being provided with a seat, respectively 10a and 10b, obtained on the end facing outwards, its axis being orthogonal to the central axis of element 10.

Such seats 10a and 10b of element 10 are designed to house the relevant sections of turns 11a and 11b, respectively, of spring 11 and therefore present a portion, that is complemantary to the crossection profile of the turns of spring 11 and, in the present example, an arched section, complementary to that of the turns and with suitable extension.

According to a further embodiment that is not being described herein, element 10 may be provided for without projections 10' and 10'', with said seats 10a and 10b directly obtained in the thickness of the annular body of element 10, so as to be still able to house the relevant sections of turns 11a and 11b of spring 11 and so that element 10 may still be inserted between said sections.

Element 10 is made of suitable material, capable of elastic yielding, preferably consisting in a poliurethan elastomer presenting appropriate mechanic and elastic characteristics, as well as suitable resistance to aging and weatherproof, such as ADIPRENE (Registered Trademark).

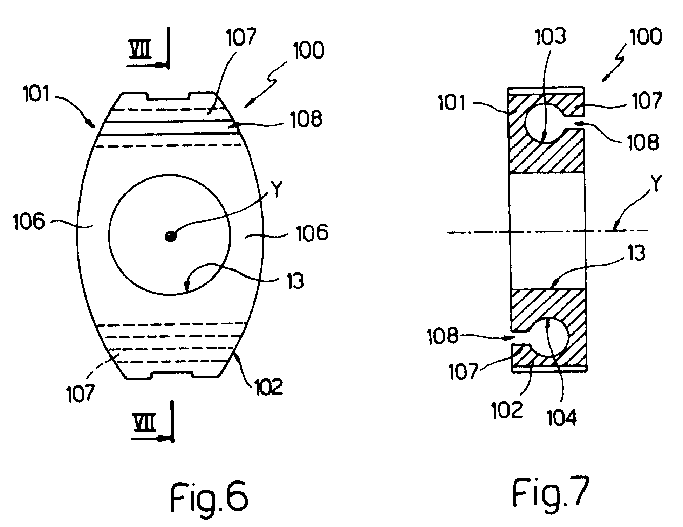

Said element 10 is designed to be inserted in the gap between two subsequent turns 11a and 11b of helical spring 11, preferably placed, in the example described herein, with its central axis parallel to the axis of wheels R of the motor vehicle schematically shown in Fig. 5 under A. Each helical spring 11 is provided with at least two elements 10, placed at opposite ends, essentially halfway down the length of spring 11, as shown by the example (fig.s 3 and 4).

Hooking means are provided for annular element 10 in connection with each section of turns 11a and 11b, of whatever suitable kind and, in the example in point, selflocking clamps 12 have been provided for to grant secure hooking.

Each clamp 12 is designed to go through hole 13 of relevant element 10 to subsequently mutually and securely engage the respective ends of said clamp, after enclosing its relevant section of the turn of the spring, so as to tightly constrain it.

Element 10 is provided for in a suitable range of types and dimensions, according to the different characteristics of the various helical springs that are part of the suspension systems of the different types of motor vehicles.

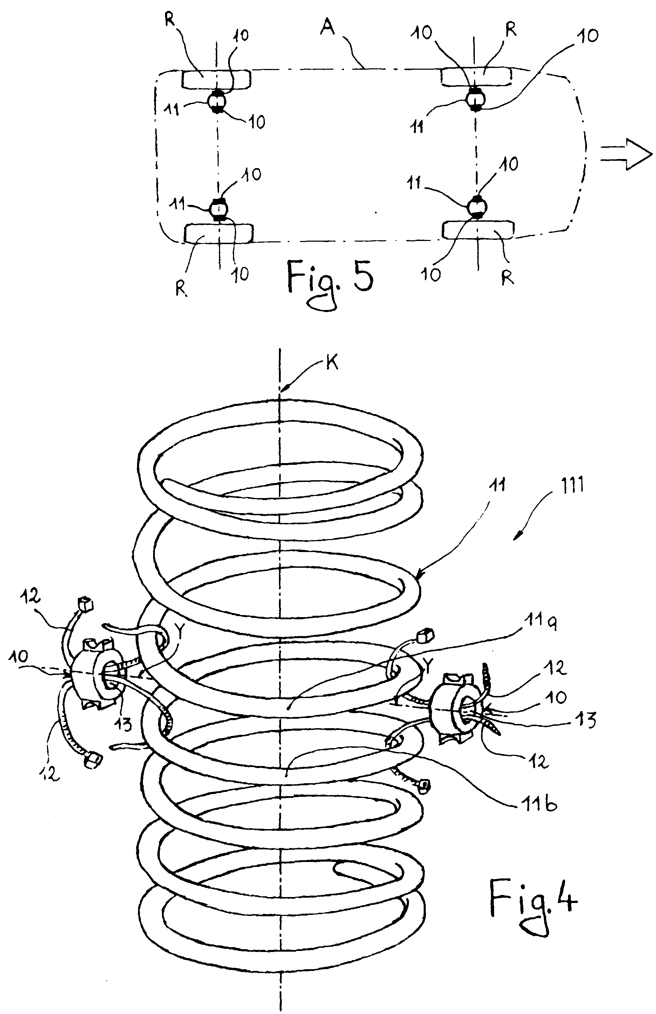

Also with reference to Fig.s 6 and 7, number 100 indicates a spacing element according to the present invention representing a preferential embodiment in respect to element 10 of Fig.s 1-5. Element 100 also has an essentially annular shape since it is provided with a central hole 13 and comprises two opposite ends 101 and 102 supplied with groove-shaped seats 103,104, similar to seats 10a, 10b and designed, as well, to match, in a complementary manner, the relevant opposite sections of adjacent turns 11a,11b of helical spring 11 (Fig.3) to constitute a damped elastic system according to the present invention, shown in its whole in Fig.s 3 and 4 under number 111, in which spacing element 10 is inserted in spring 11 in place of element 100 (on the other hand, elements 10 and 100 are fully interchangeable).

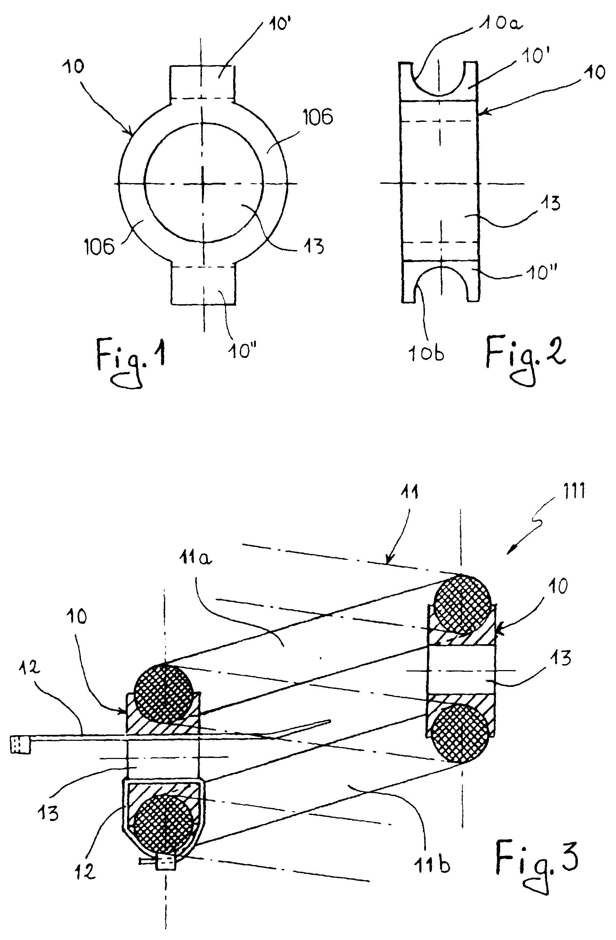

Spacing element 100, similarly to annular spacing element 10, presents a further general axis of symmetry, indicated by Y, both as to element 10 (Fig. 1) and element 100 (Fig.s 6,7), in both cases coinciding with the axis of hole 13; in any case, the latter, irrespective of its shape and origin, according to the present invention must be parallel to axis Y, whereas groove-shaped seats 10a,10b, or, similarly, 103,104, must be orthogonal to axis Y.

In this way, the shape of both spacers 10 and spacers 100 is such, that they have a preferential direction for elastic buckling, in the case in point, orthogonal to hole 13. According to the present invention, when elements 10 and 100 are inserted in spring 11 to constitute elastic system 111, axis Y is radially oriented, however elements 10,100 may be placed (whether axis Y is parallel, perpendicular or oblique to the axis of wheels R) with respect to axis K of winding and symmetry of helical spring 11 (Fig.4); consequently, when spring 11 is strained and turns 11a,11b tend to approach each other, both spacers 10 and spacers 100 are capable of elastic buckling essentially in a tangential manner with respect to turns 11a,11b, to vary their height in the direction of axis K of spring 11.

In other words, the spacing element according to the present invention (in both embodiments 10 and 100 as described hereinabove) has such a shape, as to be capable of elastic buckling in the direction of its height (i.e., the bulk between radial projections 10' and 10'' or between ends 101 and 102) as flexure strain of its own respective opposite side portions 106, symmetric to each other (Fig.s 1 and 6), so that same element may be made of a relatively rigid elastomeric material with hardness between 60 and 95 SHORE degrees.

A further characteristic of the spacing element according to the present invention consists in that its width, in the direction of the extension of the groove-shaped seats, is shorter or at most equal to its height, measured orthogonally to axis Y and seats 10a,10b or 103,104. Since, according to the basic characteristic of the damped elastic system according to the present invention, spacers 10 or 100 have a height, in the direction of axis K of spring 11, which is equal to the distance, at rest, between adjacent turns 11a,11b, between which the same spacers are inserted, now, then, no tool is necessary for the insertion of spacers 10,100 on spring 11; as concerns elements 10, for example, it is enough for them to be inserted with projections 10',10" parallel to turns 11a,11b, subsequently rotating the spacer 90° about axis Y so as to cause seats 10a,10b to engage turns 11a,11b.

As concerns elements 100, they differ from relevant elements 10 mainly in that ends 101,102 are pliers-shaped, each end 101,102 being provided with a portion 107 that may be capable of elastic deformation, so as to engage, upon release, a relevant section of turn 11a or 11b of spring 11; pliers-shaped ends 101,102 are provided, on opposite sides, with relevant hooking openings 108, parallel to hole 13. In such a way, the insertion of elements 100 may be carried out by inserting them between turns 11a,11b in a radially oblique position with respect to axis K, openings 108 facing, on opposite sides, said turns, subsequently causing them to tilt so as to engage, upon release, turns 11a,11b with sections 107.

In both instances, according to the characteristics of damped elastic system 111 according to the present invention, as previously described, spacers 10,100 are placed in a symmetric manner between turns 11a,11b at regularly spaced intervals along the whole circumference of spring 11 and no element 10 or 100 is inserted between at least the next turns, for instance, with reference to Fig. 4, above and below turns 11a,11b, so as to enable at least some of the turns of spring 11 to freely vary their distance according to the spring elastic deformations. Finally, system 111 comprises means to firmly connect, in a fixed position and on opposite sides, spacers 10,100 to adjacent turns 11a,11b, in that, being the height of spacers 10,100 equal to the distance between turns 11a,11b, with spring 11 at rest, during extension of spring 11 said spacers would not be constrained by turns 11a,11b; in connection with elements 10, they consist of holes 13 and of said clamps 12; as to elements 100, such means consist of pliers-shaped ends 101,102 with relevant elastic portions 107, without prejudice for the opportunity to utilize, in any case and for higher safety's sake, clamps 12.

## Claims

1. A damped elastic system (111) for a vehicle suspension comprising a helical spring (11) and at least one pair of spacing elements (10;100) made of elastomeric material and inserted between adjacent turns (11a,11b) of the spring, whereby said spacing elements are symmetrically arranged about said adjacent turns (11a,11b) and equally spaced along the whole circumference of said spring (11); **characterized in that:**
(i) the height of said spacing elements, in the direction of the axis of symmetry (K) of said helical spring (11), is equal to the distance, at rest, between said adjacent turns (11a,11b), between which said spacing elements (10;100) are inserted;
(ii) no said spacing elements are to be found at least between such turns, as are next to said adjacent turns (11a,11b), between which the spacing elements are inserted, so as to allow at least some of the turns of spring (11) to freely vary their distance according to the spring elastic deformation; and
(iii) said system (111) further comprises means (12; 13,101,102) to securely connect, at their opposite ends, said spacing elements (10,100) in a fixed position onto said adjacent turns (11a,11b).

2. A damped elastic system (111) as claimed in Claim 1, characterized by the fact that said spacing elements are inserted only between two turns of spring (11), substantially halfiway down the spring axial extension.

3. A damped elastic system (111) as claimed in either Claim 1 or 2, characterized by the fact that said spacing elements (10,100) are made of a weatherproof elastomer with hardness between 60 and 95 SHORE degrees.

4. A damped elastic system (111) as claimed in any one of Claims from 1 to 3, characterized by the fact that the shape of said spacing elements (10;100) is such, that they may be capable of elastic buckling to vary their height in the direction of the axis of spring (11), essentially in a tangential manner to the turns of helical spring (11).

5. A damped elastic system (111) as claimed in Claim 4, characterized by the fact that said spacing elements (10,100) present at least one through hole (13), whose width and shape are such, as to facilitate spacing elements buckling orthogonally to hole (13); said spacing elements (10,100) being inserted on said spring (11) in such a way, that the axis of symmetry (Y) of said holes (13) may be radially oriented with respect to said axis of symmetry (K) of said spring (11).

6. A damped elastic system (111) as claimed in Claim 5, characterized by the fact that said means to securely connect said spacing elements (10) to said adjacent turns (11a,11b) of the spring comprise said hole (13) and clamp-shaped constraining means (12) inserted through said holes (13) ofthe spacing elements (10), so as to clamp the relevant sections of the adjacent turns (11a,11b) of said spring (11).

7. A damped elastic system (111) as claimed in Claim 6, characterized by the fact that said means to securely connect said spacing elements (100) to turns (11a,11b) of the spring further comprise relevant pliers-shaped opposite ends (101,102) of said spacing elements, each being provided with a portion (107) capable of elastic deformation to engage, upon release, on the opposite side, the relevant sections of said adjacent turns (11a,11b) of said spring (11); said pliers-shaped ends (101,102) presenting relevant hooking openings (108), facing each other and parallel to said hole (13).

8. A spacing element (10;100) for a damped elastic system of a vehicle suspension, of the kind made of elastomeric material, capable of being inserted between two adjacent turns (11a,11b) of a helical suspension spring (11), said element comprising relevant groove-shaped seats (10a,10b;103,104), capable of matching, in a complementary manner, the relevant opposite sections of said adjacent turns (11a,11b) of the spring and having a general axis of symmetry (Y), characterized by the fact that it is provided with at least one through hole (13), parallel to said general axis of symmetry (Y) and by the fact that said groove-shaped seats (10a,10b;103,104) are orthogonal to said general axis of symmetry (Y).

9. A spacing element (10;100) as claimed in Claim 8, characterized by the fact that it has a generally annular shape and its width, in the direction of the extension of said groove-shaped seats (10a,10b;103,104), is smaller than its height, as measured orthogonally to said general axis of symmetry (Y) and to said groove-shaped seats.

10. A spacing element (10,100) as claimed in either Claim 8 or 9, characterized by the fact that it is made of a polyurethan elastomer with SHORE hardness between 60 and 95.

11. A spacing element (10;100) as claimed in Claim 10, characterized by the fact that it is made of one of the following materials: ADIPRENE, DESMOPAN, SPECTRIM, CYANAPRENE, CASTHETONE, BAYFLEX (all of them being Registered Trademarks).

12. A spacing element (100) as claimed in any one of Claims 8 to 11, characterized by the fact that its relevant opposite ends (101,102), in the direction of its height, are pliers-shaped, each end being provided with a portion (107) capable of elastic deformation to engage, upon release, a relevant section of one turn of helical suspension spring (11); said pliers-shaped ends (101,102) having, on opposite sides, relevant hooking openings (108), parallel to said hole (13).

13. A spacing element (10;100) as claimed in any one of Claims 8 to 12, characterized by the fact that different shapes and dimensions thereof, as well as varying stiffness of the material it is made of, are provided for, so as to create a range of targeted spacing elements, according to both different characteristics of spring (11) they are designed for and vehicle mass.

## Patentansprüche

1. Gedämpftes elastisches System (111) für eine Fahrzeugaufhängung, umfassend eine Schraubenfeder (11) und mindestens ein Paar von Distanzstücken (10; 100) aus Elastomermaterial und eingefügt zwischen benachbarten Windungen (11a, 11b) der Feder, wodurch die Distanzstücke symmetrisch um die benachbarten Windungen (11a, 11b) und gleichbeabstandet Iängs des Gesamtumfangs der Feder (11) angeordnet sind, dadurch gekennzeichnet, daß:
(i) die Höhe der Distanzstücke in Richtung der Symmetrieachse (K) der Schraubenfeder (11) gleich dem Ruheabstand zwischen den benachbarten Windungen (11a, 11b) ist, zwischen denen die Distanzstücke (10; 100) eingefügt sind,
(ii) keine solchen Distanzstücke sich zwischen zumindest solchen Windungen nächst den benachbarten Windungen (11a, 11b), zwischen denen die Distanzstücke eingefügt sind, finden, um so mindestens einigen der Federwindungen zu ermöglichen, ihren Abstand frei entsprechend ihrer federelastischen Deformation zu variieren, und
(iii) das System (111) ferner Mittel (12; 13, 101, 102) umfaßt, um die Distanzstücke (10; 100) mit ihren einander abgekehrten Enden in einer festen Position mit den benachbarten Windungen (11a, 11b) sicher zu verbinden.

2. Gedämpftes elastisches System (111) nach Anspruch 1, dadurch gekennzeichnet, daß die Distanzstücke nur zwischen zwei Windungen der Feder (11) im wesentlichen bei der Hälfte der axialen Federerstreckung eingefügt sind.

3. Gedämpftes elastisches System (111) nach Anspruch 1 oder 2, dadurch gekennzeichnet, daß die Distanzstücke (10; 100) aus einem wetterfesten Elastomer mit einer Shore-Härte zwischen 60 und 95 hergestellt sind.

4. Gedämpftes elastisches System (111) nach einem der Ansprüche 1 bis 3, dadurch gekennzeichnet, daß die Form der Distanzstücke (10; 100) derart ist, daß sie im wesentlichen tangential bezüglich der Windungen der Schraubenfeder (11) elastisch ausknicken können, um ihre Höhe in Richtung der Achse der Feder (11) zu verändern.

5. Gedämpftes elastisches System (111) nach Anspruch 4, dadurch gekennzeichnet, daß die Distanzstücke (10; 100) mindestens ein Durchgangsloch (13) aufweisen, dessen Weite und Form derart sind, daß das Ausknicken der Distanzstücke senkrecht zu dem Loch (13) begünstigt wird, und daß die Distanzstücke (10; 100) in die Feder (11) derart eingefügt sind, daß die Symmetrieachse (Y) der Löcher (13) radial bezüglich der Symmetrieachse (K) der Feder (11) orientiert sein kann.

6. Gedämpftes elastisches System (111) nach Anspruch 5, dadurch gekennzeichnet, daß die Mittel zum sicheren Verbinden der Distanzstücke (10) mit den benachbarten Windungen (11a, 11b) der Feder das Loch (13) und laschenförmige Spannmittel (12) umfassen, die in die Löcher (13) der Distanzstücke (10) eingefügt sind, um so die entsprechenden Abschnitte der benachbarten Windungen (11a, 11b) der Feder (11) festzuspannen.

7. Gedämpftes elastisches System (111) nach Anspruch 6, dadurch gekennzeichnet, daß die Mittel zum sicheren Verbinden der Distanzstücke (10) mit Windungen (11a, 11b) der Feder ferner entsprechende klemmenförmige einander abgekehrte Enden (101, 102) der Distanzstücke umfassen, jeweils mit einem elastisch deformierbaren Abschnitt (107) versehen, um bei Freigabe auf der gegenüberliegenden Seite die entsprechenden Abschnitte der benachbarten Windungen (11a, 11b) der Feder (11) zu erfassen, welche klemmenförmigen Enden (101, 102) entsprechende Verhakungsöffnungen (108) einander zugekehrt und parallel zu dem Loch (13) aufweisen.

8. Distanzstück (10; 100) der aus einem Elastomermaterial hergestellten Art für ein gedämpftes elastisches System einer Fahrzeugaufhängung, das zwischen zwei benachbarten Windungen (11a, 11b) einer Aufhängungs-Schraubenfeder (11) einfügbar ist, welches Distanzstück entsprechende nutförmige Sitze (10a, 10b; 103, 104) umfaßt, die sich komplementär an die entsprechenden gegenüberliegenden Querschnitte der benachbarten Windungen (11a, 11b) der Feder anpassen, und das eine allgemeine Symmetrieachse (Y) aufweist, dadurch gekennzeichnet, daß es mit mindestens einem Durchgangsloch (13) parallel zu der allgemeinen Symmetrieachse (Y) versehen ist und daß die nutförmigen Sitze (10a, 10b; 103, 104) senkrecht zu der allgmeinen Symmetrieachse sind.

9. Distanzstück (10; 100) nach Anspruch 8, dadurch gekennzeichnet, daß es generell ringförmig ist und seine Breite in Richtung der Erstreckung der nutförmigen Sitze (10a, 10b; 103, 104) kleiner ist als seine Höhe, gemessen senkrecht zu der allgemeinen Symmetrieachse (Y) und zu den nutförmigen Sitzen.

10. Distanzstück (10; 100) nach Anspruch 8 oder 9, dadurch gekennzeichnet, daß es aus einem Polyurethan-Elastomer mit einer Shore-Härte zwischen 60 und 95 hergestellt ist.

11. Distanzstück nach Anspruch 10, dadurch gekennzeichnet, daß es aus einem der folgenden Materialien hergestellt ist: ADIPRENE, DESMOPAN, SPECTRIM, CYANAPRENE, CASTHETONE, BAYFLEX (sämtlich registrierte Warenmarken).

12. Distanzstück (100) nach einem der Ansprüche 8 bis 11, dadurch gekennzeichnet, daß seine jeweiligen einander abgekehrten Enden (101, 102) in Höhenrichtung klemmenförmig sind, wobei jedes Ende mit einem elastisch deformierbaren Abschnitt (107) versehen ist, um bei Freigabe einen entsprechenden Querschnitt einer Windung der Aufhängungs-Schraubenfeder (11) zu erfassen, welche klemmenförmigen Enden (101, 102) auf einander abgekehrten Seiten entsprechende Verhakungsöffnungen (108) parallel zu dem Loch (13) aufweisen.

13. Distanzstück (10; 100) nach einem der Ansprüche 8 bis 12, dadurch gekennzeichnet, daß unterschiedliche Formen und Abmessungen derselben wie auch variable Steife des Materials, aus dem es hergestellt ist, vorgesehen sind, um so einen Bereich von angestrebten Distanzstükken entsprechend sowohl unterschiedlichen Charakteristiken der Feder (11), für die sie ausgelegt sind, als auch der Fahrzeugmasse zu erzeugen.

## Revendications

1. Un système élastique à amortissement (111) pour une suspension de véhicule, comprenant un ressort hélicoïdal (11) et, au moins, une paire d'éléments d'espacement (10; 100) réalisés en matériau élastomère et insérés entre des spires adjacentes (11a,11b) du ressort, si bien que lesdits éléments d'espacement sont disposés symétriquement autour desdites spires adjacentes (11a, 11b) et espacés également le long de toute la circonférence dudit ressort (11), caractérisé en ce que:
(i) la hauteur desdits éléments d'espacement dans la direction de l'axe de symétrie (K) dudit ressort hélicoïdal (11) est égale à la distance, au repos, entre lesdites spires adjacentes (11a, 11b) entre lesquelles lesdits éléments d'espacement (10, 100) sont insérés,
(ii) aucun desdits éléments d'espacement ne doit se trouver, au moins entre les spires telles que celles qui sont voisines desdites spires adjacentes (11a, 11b) entre lesquelles les éléments d'espacement sont insérés, de manière à permettre, au moins, à certaines spires du ressort (11) de modifier librement leur distance en fonction de la déformation élastique du ressort, et
(iii) ledit système (111) comprend, en outre, des moyens (12; 13, 101, 102) pour assembler avec sécurité à leurs extrémités opposées, lesdits éléments d'espacement (10, 100) en position fixe sur lesdites spires adjacentes (11a, 11b).

2. Un système élastique à amortissement (111) selon la revendication 1, caractérisé en ce que lesdits éléments d'espacement ne sont intercalés qu'entre deux spires du ressort (11), sensiblement à ni-distance le long de l'extension axiale du ressort.

3. Un système élastique à amortissement (111) selon la revendication 1 ou 2, caractérisé en ce que lesdits éléments d'espacement (10, 100) sont réalisés à partir d'un élastomère à l'épreuve des intempéries d'une dureté comprise entre 60 et 95 degrés Shore.

4. Un système élastique à amortissement (111) selon l'une quelconque des revendications 1 à 3, caractérisé en ce que la forme desdits éléments d'espacement (10; 100) est telle qu'ils peuvent être susceptibles de se déformer élastiquement de manière à modifier leur hauteur dans la direction de l'axe du ressort (11), essentiellement tangentiellement aux spires du ressort hélicoïdal (11).

5. Un système élastique à amortissement (111) selon la revendication 4, caractérisé en ce que lesdits éléments d'espacement (10, 100) comportent, au moins, un trou traversant (13) dont la largeur et la forme sont telles que la déformation des éléments d'espacement est facilitée orthogonalement au trou (13); lesdits éléments d'espacement (10, 100) étant insérés sur ledit ressort (11) de manière que l'axe de symétrie (Y) desdits trous (13) peut être orienté radialement par rapport audit axe de symétrie (K) dudit ressort (11).

6. Un système élastique à amortissement (111) selon la revendication 5, caractérisé en ce que lesdits moyens pour fixer avec sécurité lesdits éléments d'espacement (10) sur lesdites spires adjacentes (11a, 11b) du ressort comprennent ledit trou (13) et des moyens de contrainte en forme de collier d'attache (12) introduits à travers lesdits trous (13) des éléments d'espacement (10), de manière à serrer les parties correspondantes des spires adjacentes (11a, 11b) dudit ressort (11).

7. un système élastique à amortissement (111) selon la revendication 6, caractérisé en ce que lesdits moyens de fixation de sécurité desdits éléments d'espacement (100) sur les spires (11a, 11b) du ressort, comprennent, en outre, des extrémités opposées correspondantes en forme de pince (101, 102) desdits éléments d'espacement, chacune d'elles étant pourvue d'une partie (107) susceptible de se déformer élastiquement pour engager, lors de la détente, sur le côté opposé, les sections correspondantes desdites spires adjacentes (11a, 11b) dudit ressort (11), lesdites extrémités en forme de pince (101, 102) présentant des ouvertures d'accrochage correspondantes (108) se faisant mutuellement face et parallèles audit trou (13).

8. Un élément d'espacement (10, 100) pour un système élastique à amortissement d'une suspension de véhicule, du type réalisé en matériau élastomère, susceptible d'être inséré entre deux spires adjacentes (11a, 11b) d'un ressort de suspension hélicoïdal (11), ledit élément comprenant des sièges correspondants en forme de rainure (10a, 10b; 103, 104) susceptibles de s'adapter de façon complémentaire, aux parties opposées correspondantes desdites spires adjacentes (11a, 11b) du ressort et ayant un axe de symétrie général (Y), caractérisé en ce qu'il est pourvu, au moins, d'un trou traversant (13) parallèle audit axe de symétrie général (Y) et que lesdits sièges en forme de rainure (10a, 10b; 103, 104) sont orthogonaux audit axe de symétrie général (Y).

9. Un élément d'espacement (10; 100) selon la revendication 8, caractérisé en ce qu'il est de forme généralement annulaire et que sa largeur. dans la direction d'extension desdits sièges en forme de rainure (10a, 10b; 103, 104) est inférieure à sa hauteur, mesurée orthogonalement audit axe de symétrie général (Y) et auxdits sièges en forme de rainure.

10. Un élément d'espacement (10, 100) selon la revendication 8 ou 9, caractérisé en ce qu'il est réalisé en élastomère de polyuréthane d'une dureté Shore entre 60 et 95.

11. Un élément d'espacement (10, 100) selon la revendication 10, caractérisé en ce qu'il est réalisé à partir de l'un des matériaux suivants: ADIPRENE, DESMOPAN, SPECTRIM, CYANAPRENE, CASTHETONE, BAYFLEX (qui sont tous des marques déposées).

12. Un élément d'espacement (100) selon l'une quelconque des revendications 8 à 11, caractérisé en ce que ses extrémités opposées correspondantes (101, 102), dans la direction de sa hauteur, sont en forme de pince, chaque extrémité étant pourvue d'une partie (107) susceptible de se déformer élastiquement pour engager lors de la détente une partie correspondante d'une spire du ressort de suspension hélicoïdal (11); lesdites extrémités en forme de pince (101, 102) ayant, sur les côtés opposés, des ouvertures d'accrochage correspondantes (108), parallèles audit trou (13).

13. Un élément d'espacement (10, 100) selon l'une quelconque des revendications 8 à 12, caractérisé en ce qu'il est prévu des formes et des dimensions différentes de celui-ci ainsi que différentes rigidités du matériau servant à sa fabrication de manière à constituer une gamme d'éléments d'espacement définis en fonction, selon les différentes caractéristiques du ressort (11) pour lequel ils sont prévus et de la masse du véhicule.
